# EUROPÄISCHE PATENTSCHRIFT

(11) **EP 0 760 750 B1**
(45) Veröffentlichungstag und Bekanntmachung des Hinweises auf die Patenterteilung: **10.10.2001**
(21) Anmeldenummer: 96903860.3
(22) Anmeldetag: 04.03.1996
(51) Int. Cl.: B60G 11/08, F16F 1/368, B60G 7/00

(54) **RADAUFHÄNGUNG MIT QUERBLATTFEDERUNG**
WHEEL SUSPENSION WITH TRANSVERSE LEAF-SPRING SUSPENSION
SUSPENSION DE ROUES AVEC AMORTISSEUR A RESSORT TRANSVERSAL A LAME

(30) Priorität: 06.03.1995 CH 62495
(43) Veröffentlichungstag der Anmeldung: 12.03.1997
(73) Patentinhaber: ESORO AG, 8117 Fällanden (CH)
(72) Erfinder: JAGGI, Diego, CH-8700 Küsnacht (CH)
(86) Internationale Anmeldenummer: CH9600076
(87) Internationale Veröffentlichungsnummer: WO9627507

(56) Entgegenhaltungen:
- EP-A- 0 213 367
- EP-A- 0 251 850
- EP-A- 0 318 753
- EP-A- 0 445 620
- EP-A- 0 476 714
- WO-A-87/01339
- DE-A- 4 140 236
- DE-U- 7 532 852
- FR-A- 563 096
- FR-A- 2 253 400
- FR-A- 2 607 449
- FR-A- 2 632 573
- FR-A- 2 671 762
- FR-A- 2 717 124
- US-A- 4 509 774
- US-A- 4 613 152
- US-A- 4 768 807
- COMPOSITES, Bd. 25, Nr. 2, März 1985, PARIS, FR, Seiten 31-38, XP002010403 DE GONCOURT & SAYERS: "Une suspension automobile en composite"

## Beschreibung

Die Erfindung betrifft eine Radaufhängung für eine Fahrzeugachse mit zwei Rädern, mit einer Querblattfederung gemäss Oberbegriff des unabhängigen Patentanspruchs 1. In der Fahrzeugtechnik sind Radaufhängungen mit nur einer Stahl-Querblattfeder für beide Räder einer Achse bekannt für einen relativ einfachen Aufbau, wobei jedoch damit keine präzise Radführung möglich ist. Anderseits ist z.B. aus der Chevrolet Corvette eine leichte Querblattfeder aus Verbundwerkstoff bekannt, welche jedoch keine Radführung übernimmt, so dass hier eine relativ aufwendige, viele Elemente umfassende Radaufhängung erforderlich ist. Überdies brauchen solche bisherige Konstruktionen auch relativ viel Bauvolumen.

Es sind auch Radaufhängungen mit beschränkt radführenden Querblattfedern in Verbundwerkstoffen bekannt geworden, welche jedoch noch keine präszise Radführung unter allen Fahrbedingungen ermöglichen, z.B. aus der US-A-4768807, welche als nächstliegender Stand der Technik dem Oberbegriff von Anspruch 1 entspricht. Darin wird eine Querblattfeder mit relativ aufwendiger Zweipunktlagerung offenbart. Diese besteht aus einer festen Umhüllung, welche mittels einer Gummizwischenschicht an der Blattfeder fixiert ist und welche eine Drehachse aufweist. Die Drehachse ist ihrerseits mittels auswechselbaren Gummibüchsen am Fahrzeugrahmen befestigt. Diese Gummibüchsen sind systembedingt bezüglich Fahrrichtung X, Querrichtung Y und Vertikalrichtung Z elastisch ausgebildet und ergeben damit elastische Verschiebungen der Querblattfeder an der Zweipunktlagerung in allen drei Raumrichtungen, was eine präzise Radführung insbesondere in X- und Y-Richtung ausschliesst. In der Publikation 'Une suspension automobile en composite', De Goncourt, L und Sayers, K, Composites, März / April 1985, No. 2, Vo.. 25, Paris, FR wird eine Radaufhängung mit abgewandelter Querblattfeder und Zweipunktlagerung beschrieben, welche jedoch nur im Mittelteil flach und flexibel ausgebildet ist und deren beiden Aussenteile ausserhalb der der Zweipunktlagerung trapezförmig zusammenlaufen, so dass sie im wesentlichen starr, d.h. nicht federnd wirken. Dies ergibt jedoch im flexiblen

Mittelteil, wo an sich schon die höchste Belastung einer normalen Querblattfeder auftritt, durch diese Ausbildung bedingt nochmals eine hohe zusätzliche Belastung und entsprechend grössere Auslenkungen und Verschiebungen, welche durch die exzentrische Zweipunktlagerung nochmals verstärkt werden. Auch hier ist somit eine präzise Radführung, im besonderen auch in Querrichtung Y, systembedingt nicht möglich. Bei den bekannten Radaufhängungen mit Querblattfeder ist es systembedingt nicht möglich, die notwendige hohe Präzision der Radführung in allen Fahrzuständen und bezüglich aller drei Raumrichtungen zu erreichen, da die Ausbildung der notwendigen Elemente in Kombination dies nicht ermöglicht, d.h. die Ausbildung der Querblattfeder selber, von deren Zweipunktlagerung D und von der Anlenkung G am Radträger.

Es ist daher Aufgabe der vorliegenden Erfindung, eine Radaufhängung mit Querblattfederung zu schaffen, welche die Nachteile bisheriger Ausführungen überwindet, welche einfach, leicht und raumsparend ist und dennoch eine präzise Radführung in allen Fahrzuständen und bezüglich aller drei Raumrichtungen mit sehr guten Fahr- und Federungseigenschaften ermöglicht und welche auch alle Auftriebs- und Bremsmomente aufnimmt. Überdies soll diese Radaufhängung einfach und kostengünstig in der Herstellung und zur Montage sein und sich auch besonders gut für Leichtbaufahrzeuge eignen.

Diese Aufgabe wird erfindungsgemäss gelöst durch eine Radaufhängung gemäss Patentanspruch 1. Durch die Auslegung der straff und präzise gehalterten radführenden Verbundwerkstoff-Querblattfeder mit ihrer Zweipunktlagerung D und der anisotropen elastischen Anlenkung G am Radträger, welche definierte und abgestimmte Steifigkeiten in den drei Richtungen X, Y, Z aufweisen, werden in Kombination mit dem einen Radführungselement alle Radkräfte inkl. Antriebs- und Bremsmomente aufgenommen und optimale Fahreigenschaften mit denkbar einfachstem Aufwand und mit einer minimalen Anzahl von Aufhängungselementen erreicht. Gleichzeitig werden damit auch Gewicht- und Raumbedarf für die ganze Radaufhängung wesentlich reduziert.

Die abhängigen Ansprüche betreffen vorteilhafte Weiterbildungen der Erfindung mit besonders leichten, günstig zu fertigenden und zu montierenden Aufhängungen, welche besonders vorteilhafte Fahreigenschaften und Federungseigenschaften ergeben und womit das Fahrwerk optimal auf die gewünschten Betriebsbedingungen eingestellt werden kann. Das Radführungselement kann als radführendes Dämpferbein ausgebildet sein und dadurch eine besonders raumsparende und einfache Aufhängung bilden. Das Radführungselement kann auch als Dreieck-Querlenker ausgebildet sein, womit z.B. eine besonders niedrige Bauhöhe für Vorderachsen von Fahrzeugen mit niedrigen Frontpartien ermöglicht wird.

Im folgenden wird die Erfindung anhand von Beispielen im Zusammenhang mit den Figuren weiter erläutert. Es zeigen
- Fig. 1: eine erfindungsgemässe Radaufhängung mit Aufnahme aller einwirkenden Kräfte und Momente,
- Fig. 2: eine angetriebene Vorderachse mit Dämpferbeinen und Träger-Hilfsrahmen,
- Fig. 3: eine Hinterachse mit Dämpferbeinen und Bremsnickabstützung,
- Fig. 4: ein Beispiel mit einem Dreieck-Querlenker als Radführungselement,
- Fig. 5, 6: Beispiele der Lagerung D der Querblattfeder am Chassis,
- Fig. 7: ein Beispiel der Anlenkung G der Querblattfeder am Radträger,
- Fig. 8: eine gebogene Querblattfeder,
- Fig. 9: eine Querblattfeder mit zusätzlichen Anschlägen,
- Fig. 10: eine Querblattfeder mit mittigem Gegenbogen und Niveauregulierung.

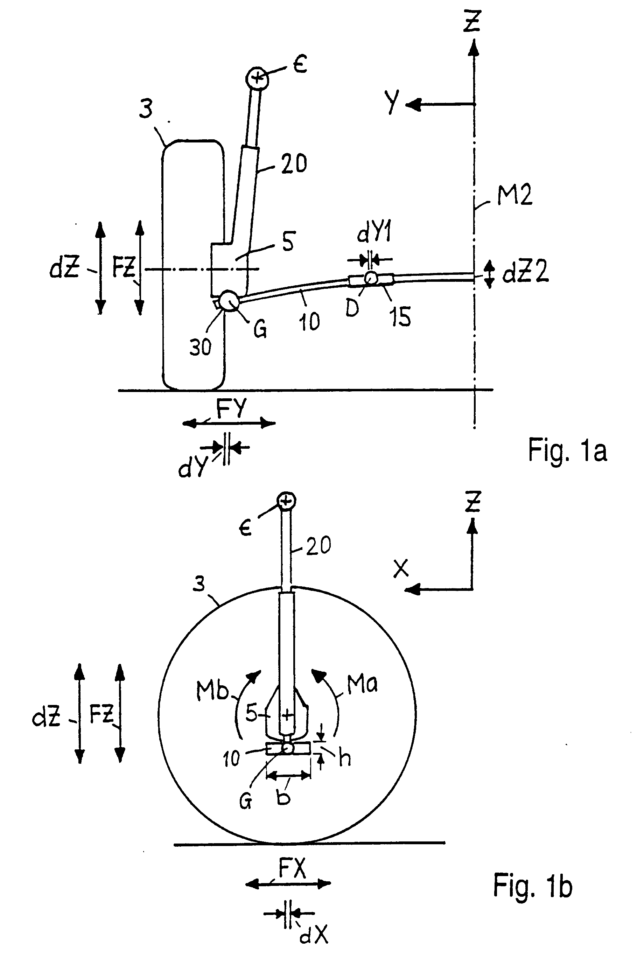

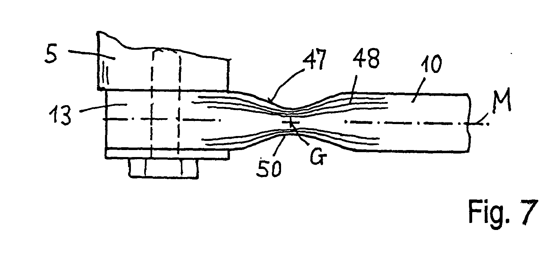

Figur 1 zeigt schematisch eine erfindungsgemässe Radaufhängung in Front- und Seitenansicht mit einer Querblattfeder 10, welche mit einem anisotropen elastischen Gelenk 30 (bzw. 50 in Fig. 7) im Anlenkpunkt G mit einem Radträger 5 verbunden ist und mit einem Teleskop-Dämpferbein 20, welches mit dem Radträger 5 fest verbunden ist und welches am Dompunkt E am Chassis bzw. der Karosserie des Fahrzeugs angelenkt ist. Die Querblattfeder 10 ist in den Zweipunktlagern 15 mit Drehachse D am Chassis gelagert. Alle auf das Rad 3 wirkenden Kräfte und Momente werden durch die kombinierte Wirkung dieser beiden Radführungselemente 10 und 20 aufgenommen: Vertikalkräfte FZ in Hochrichtung Z werden von der Blattfeder 10 mit grosser Auslenkung dZ (bzw. mit kleiner Federrate cZ) abgefedert. In Querrichtung Y auftretende Kräfte FY sowie in Fahrrichtung X auftretende Längskräfte FX werden durch die entsprechend steif ausgelegte und straff gelagerte Querblattfeder 10 abgestützt. Die Querblattfeder ist in X-Richtung sehr steif ausgelegt mit sehr hoher Federrate cX, so dass das Verhältnis der Federraten cX / cZ mindestens 15, vorzugsweise ca. 20 bis 40 beträgt. Dabei kann eine sehr geringe Auslenkung dX in Längsrichtung zum Ausgleich der Abrollhärte vom Stahlgürtelreifen eingestellt bzw. zugelassen werden. Ein entscheidender Vorteil ist damit erreicht: Hier ist kein zusätzlicher Längslenker irgendwelcher Art zur Abstützung von Längskräften FX mehr erforderlich, wie dies bisher immer notwendig war.

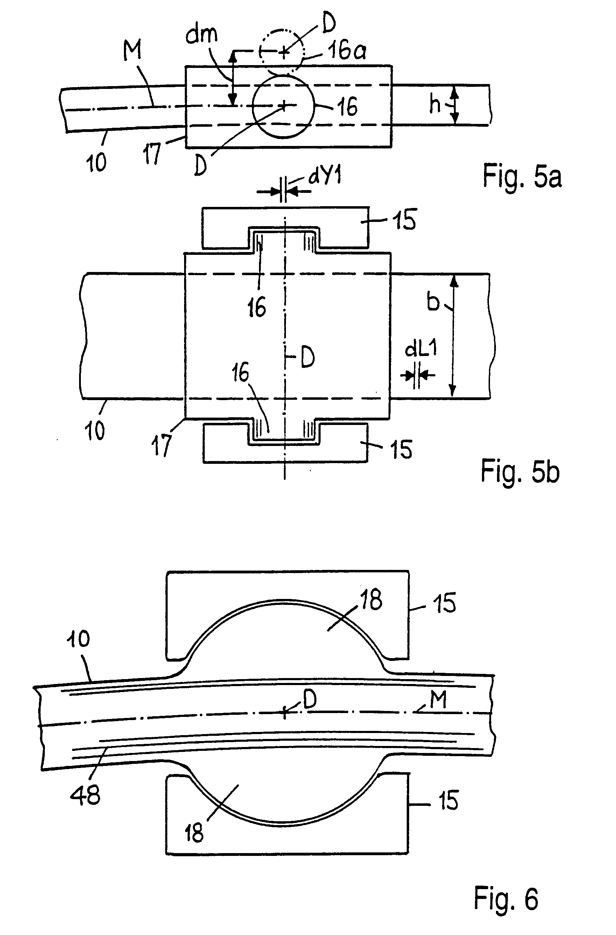

In Querrichtung wird die Auslenkung dY minimal gehalten durch entsprechend straffe Halterung in der Zweipunktlagerung D bzw. 15 (siehe Fig. 5). Antriebs- und Bremsmomente Ma und Mb werden durch die Querblattfeder 10 und das Dämpferbein 20 abgestützt. Geeignete Dimensionierungen sind am Schluss angegeben. Die Anlenkung G wird zur Figur 7 weiter erläutert.

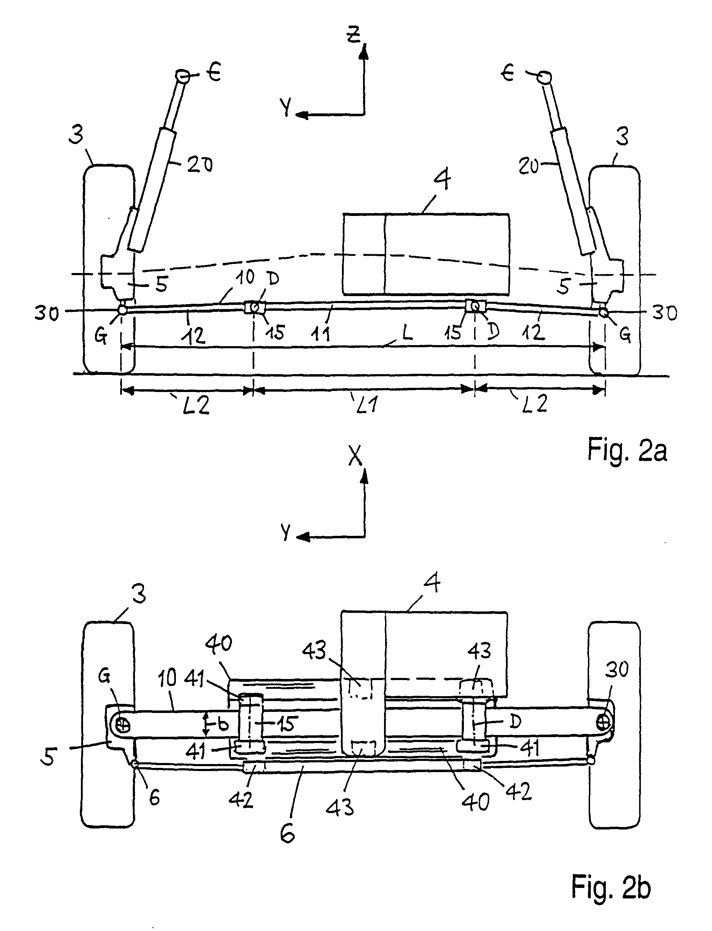

Figur 2a, b, c zeigt in drei Ansichten eine Vorderachse mit Frontantrieb und mit einem Träger 40 (Fig. 2b) als leichter Hilfsrahmen, an welchem die Zweipunktlagerung D, 15 der Querblattfeder 10 an den Halterungen 41 befestigt ist. Auch eine Antriebseinheit 4 (z.B. ein Elektromotor mit Getriebe und Differential oder eine Parallel-Hybrideinheit) ist hier am Träger 40 an den Halterungen 43 befestigt, z.B. angeschraubt. Auch das Lenkgetriebe einer Lenkung 6 ist an den Punkten 42 ebenfalls am Träger 40 fixiert. Dieser Träger 40 kann so mit der ganzen Aufhängung und den daran befestigten Komponenten separat montiert, eingestellt und geprüft werden. Dann kann dieses Modul einfach und rasch am Chassis bzw. an der Karosserie des Fahrzeugs eingebaut werden. Die horizontalen Längen von Mittelteil 11 und Aussenteilen 12 betragen L1 bzw. L2. Die Gesamtlänge der Querblattfeder ist L = L1 + 2 x L2.

Mit der erfindungsgemässen Aufhängung werden durch die eine Querblattfeder 10 in Kombination mit den zwei radführenden Dämpferbeinen 20 an einer Achse z.B. mindestens zwei untere Dreieck-Querlenker, zwei Spiralfedern und ein Stabilisator einer bisherigen McPherson-Federbeinaufhängung substituiert. Dies ergibt eine besonders einfache, leichte und kostengünstige Lösung.

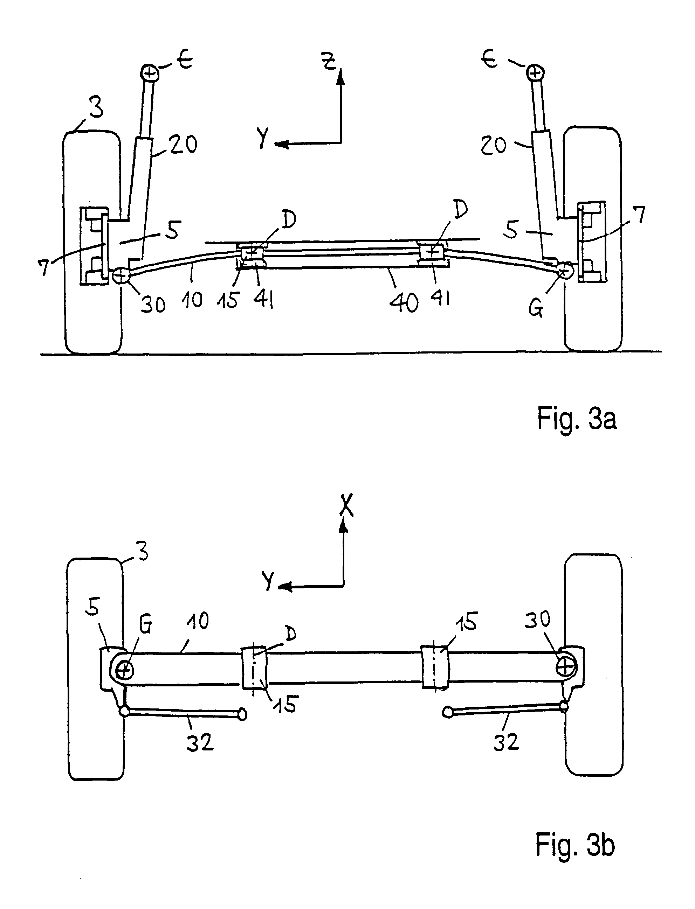

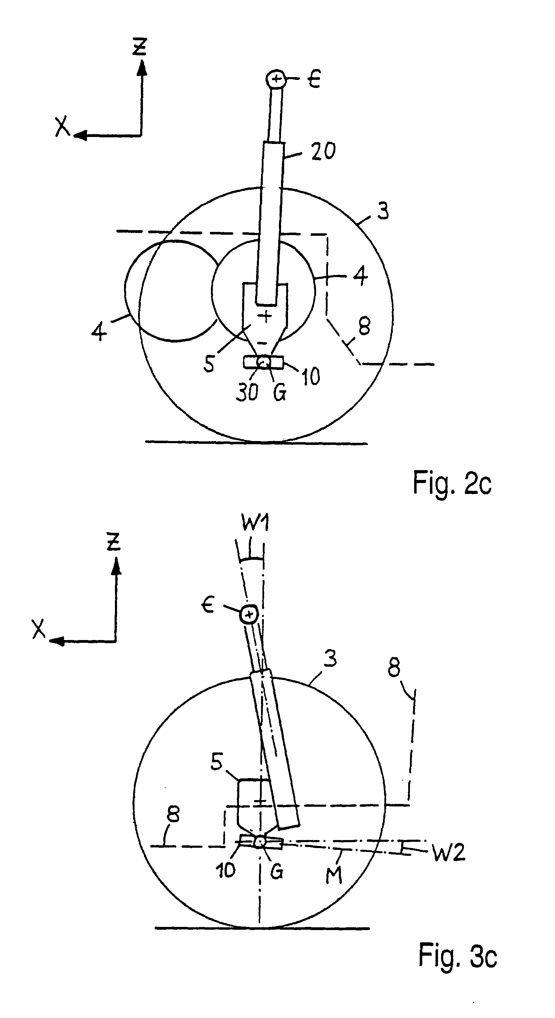

Figur 3a, b, c zeigt eine Hinterachsaufhängung mit Dämpferbeinen 20, welche in einem Winkel W1 von z.B. 8° - 12° zur Vertikalen Z angeordnet sind. Und die Querblattfeder 10 ist hier leicht nach hinten geneigt mit einem Winkel W2 der Mittelebene M zur Horizontalen X von z.B. 1° - 5°. Damit wird eine Brems-Nickabstützung, d.h. ein Antidive-Effekt erreicht. Dieser Effekt kann analog dazu auch bei einer Ausführung mit Dreiecks-Querlenkern als Radführungselement (nach Fig. 5) durch eine Auslegung mit den Winkeln W1 und W2 realisiert werden.

Als weitere Optimierung der Fahrwerksgeometrie ist hier zusätzlich eine leichte, einstellbare Spurstange 32 am Radträger 5 angelenkt, mit welcher ein gewünschtes günstiges Eigenlenkverhalten bzw. eine Vorspuränderung beim Ein- und Ausfedern der Hinterachse eingestellt werden kann. Die äusserst raumsparende Bauweise dieser erfindungsgemässen einfachen Radaufhängung wird auch ersichtlich durch die eingezeichnete Innenraumbegrenzung 8 (Fig. 2c, 3c). In Figur 3a ist eine besonders einfache und leichte Weiterbildung dargestellt, bei welcher der Radträger 5 mit einem Bremsschild 7 einer Trommelbremse zusammen einstückig ausgebildet ist.

Vorzugsweise kann der Radträger mit Bremsschild als ein Aluminiumteil gefertigt, z.B. gegossen sein, und Bohrungen für Bremsbacken und Leitungen aufweisen. Die entsprechende Bremstrommel kann ebenfalls einstückig in die Radfelge integriert sein.

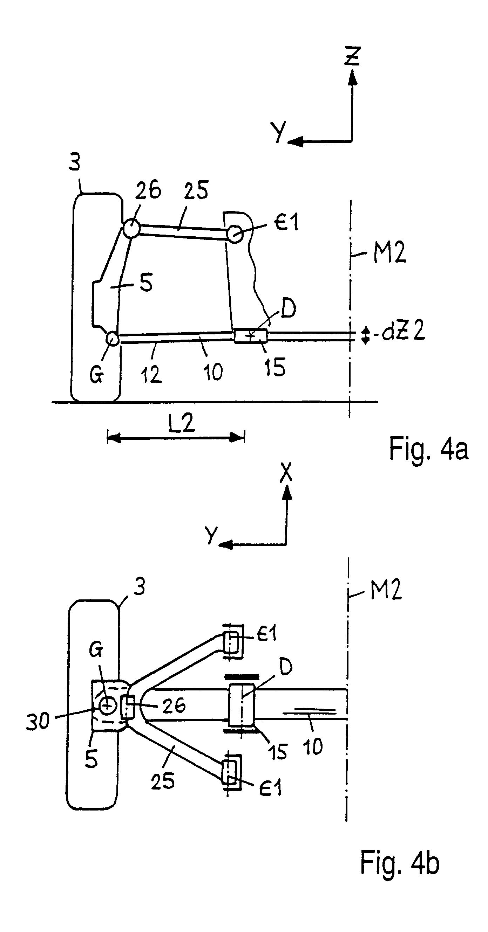

Figur 4a, b zeigt ein Beispiel mit einem Dreieck-Querlenker 25 als Radführungselement, welcher in den Lagern E1 am Chassis und im Lager 26 am Radträger 5 angelenkt ist. Die gewünschte Fahrwerksauslegung wird durch die geometrische Anordnung des Querlenkers in Bezug auf den Aussenteil 12 der Blattfeder und der Gelenke 26, E1, G und D in an sich bekannter Weise erzielt. Eine erfindungsgemässe Blattfeder 10 substituiert hier also im Prinzip zwei untere Querlenker, zwei Federn und allfällig einen Stabilisator einer bisher üblichen Radaufhängung.

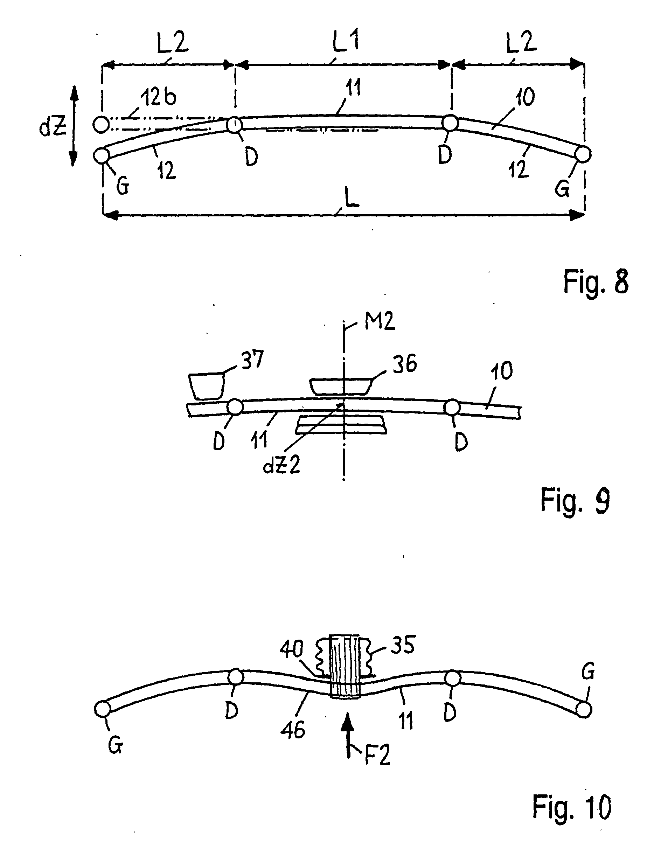

Die Figuren 5 und 6 zeigen Beispiele der sehr präzisen und straffen Zweipunktlagerung der Querblattfeder 10 in den Lagern 15 mit Drehachse D. Da sich die horizontale Länge L1 des Mittelteils der Blattfeder zwischen den Lagern 15, D (siehe Fig. 2a und 10) beim Einfedern leicht verändert um dLl von z.B. +/- 1 mm, muss dies in der Lagerung 15 elastisch kompensiert bzw. aufgenommen werden. Vorzugsweise wird dies so eingestellt, dass die auftretende maximale elastische Querverschiebung dY1 nicht grösser ist als die maximale Längenänderung dLl der Feder, d.h. dass dY1 z.B. 1 - 2 mm, höchstens jedoch 3 mm beträgt. Dazu sollte der Lagerdrehpunkt D möglichst in der Mittellinie bzw. Mittelebene M der Blattfeder liegen. Anderseits sollte die Blattfeder in den Lagerpunkten nicht geschwächt sein. Alle Fasern sollten möglichst durchgehend sein. Dies wird hier erreicht, indem eine Manschette 17 mit Drehzapfen 16 grossflächig auf die Blattfeder geklebt wird. Die Drehzapfen 16 mit den Achsen D liegen in der Blattmitte M. Eine skizzierte andere Ausführung mit einer Drehachse 16a weist einen Abstand dm zwischen D und M auf, welcher jedoch möglichst nicht grösser sein sollte als die Dicke h der Querblattfeder.

Figur 6 zeigt eine Ausführung mit integrierter zylinderförmiger Verdickung 18 der Blattfeder, welche die Drehachse D definiert und welche in der Lagerung 15 gehalten ist. Diese Verdickung wird bei der Herstellung aus dem gleichen Verbundmaterial wie die Blattfeder zusätzlich auf die durchgehende Schichtung der Blattfeder 10 mit durchgehenden Längsfasern 48 aufgebracht. Wie diese Beispiele illustrieren, wird die notwendige minimale Flexibilität dY1 durch passende Formgebung und Ausgestaltung von Blattfeder an dieser Stelle und von zugeordnetem Lagerteil am Chassis eingestellt.

Die Figur 7 zeigt Anlenkungen mittels anisotropen elastischen Gelenken 50 an den Enden der Blattfeder 10 mit einem Gelenkpunkt G. Um das Auftreten störender Momente auszuschliessen, ist der Gelenkpunkt G in die Blattmittellinie M der Blattfeder gelegt (Fig. 7).

Die Anlenkung G muss so ausgebildet sein, dass die notwendigen Bewegungen des Radträgers 5 ohne wesentliche Torsionskräfte ausführbar sind. Dazu genügt ein anisotropes elastisches Gelenk 50 gemäss Beispiel von Fig. 7, wobei hier die Anlenkung G an den Radträger 5 als flexible Stelle in Form einer Einbuchtung 47 in die Querblattfeder eingeformt ist. Dabei sind jedoch die Längsfasern 48 zum grossen Teil durchgehend gelegt, so dass die erforderliche Festigkeit auch hier vollständig erhalten bleibt. Das Ende 13 der Blattfeder ist mit dem Radträger 5 z.B. durch Verschraubung fest verbunden. Die Dimensionierung der flexiblen Stelle 47 wird so gewählt, dass die angegebenen Federraten cX, cZ und Auslenkungen dX, dY, dZ eingehalten werden.

Das elastische Gelenk 50 bzw. die flexible Stelle 47 kann aber auch aus einem Verbindungsteil bestehen, welches einerseits an der Blattfeder 10 und andererseits am Radträger 5 befestigt ist, z.B. aus einem flexiblen Winkelstück.

Figur 8 zeigt eine Form einer Querblattfeder 10 in unbelastetem Zustand, welche im Mittelteil 11 zwischen den Lagerpunkten D schwach gebogen oder fast gerade verläuft und deren Aussenteile 12 zu den Gelenkpunkten G hin nach unten gebogen sind. Diese Form ist so ausgelegt, dass für die vorgesehene Belastung im Fahrzeug die Gesamtauslenkung dZ, d.h. der ganze Federbereich, im wesentlichen etwa gleichmässig oberhalb und unterhalb der Horizontalen liegt. Bei mittlerer Fahrzeugbelastung liegen die Aussenteile 12 dann im wesentlichen horizontal: Lage 12b. Die Federform wird so ausgelegt, dass auch die Längenänderung dLl im mittleren Bereich möglichst klein bleibt (siehe Figur 5). Eine besonders einfache Ausführung weist einen konstanten, relativ grossen rechteckförmigen Querschnitt auf mit Dimensionen wie unten angegeben. Zur Erhöhung der Bruchsicherheit kann die Feder im Mittelteil 11 auch etwas dicker ausgelegt werden.

Wie in Figur 1a gezeigt ist, weist die Querblattfeder 10 in der Fahrzeugmittelebene M2 einen Auslenkbereich dZ2 auf. Durch Beeinflussung dieses Auslenkbereichs dZ2 in M2 kann die Federcharakteristik cZ am Anlenkpunkt G beeinflusst werden, was anhand der Figuren 9 und 10 weiter illustriert wird.

Figur 9 zeigt zusätzliche Anschläge 36, 37 im Mittelteil 11 der Querblattfeder, mit welchen die Auslenkungen und damit auch die Längenänderung dLl begrenzt werden können und womit eine gezielte Beeinflussung der Federcharakteristik möglich ist. Auch hier soll die Blattfeder grossflächig auf den Anschlägen aufliegen, um Belastungsspitzen zu vermeiden. Die Anschläge können auch elastisch ausgebildet sein, z.B. als Gummipuffer 37. Beispielsweise kann damit eine gewünschte progressive Federcharakteristik eingestellt werden.

Figur 10 zeigt eine andere. Form einer Querblattfeder 10 mit einem Gegenbogen 46 im Mittelteil 11. Dies kann zu einer weiteren Vergrösserung des freien Nutzraumes beitragen. Es wird damit in diesem Beispiel aber auch Platz geschaffen für eine Zusatzfederung 35, welche zur Niveauregulierung als Anpassung auf unterschiedliche Beladungszustände des Fahzeugs einsetzbar ist. Diese Zusatzfeder 35 ist z.B. als Luftfeder ausgebildet, welche am Chassis, bzw. am Träger 40 (siehe Figur 2b, 3a), abgestützt ist und welche die Querblattfeder 10 z.B. mit einem Band umfasst, so dass diese mit einer der Zuladung entsprechenden Kraft F2 in der Mitte nach oben gedrückt werden kann.

Im folgenden werden einige Zahlenwerte und Daten angegeben als Beispiele für erfindungsgemässe Radaufhängungen in einem zwei- bis vierplätzigen Leichtbaufahrzeug mit
z.B. einem Leergewicht von 400 - 700 kg und
einem Gesamtgewicht von 600 - 1000 kg.

Die Querblattfeder weist folgende Dimensionen auf:

| | | | | |
|---|---|---|---|---|
| Gesamtlänge | L | 1000 - 1100 mm | | |
| Länge Mittelteil | L1 | 400 - 450 mm | | |
| Länge Aussenteile | L2 | 300 - 350 mm | | |
| | | | | |
| Breite | b | 60 - 100 mm, | vorzugsweise | 70 - 80 mm |
| Höhe | h | 10 - 20 mm, | vorzugsweise | 12 - 15 mm |
| Verhältnis | b/h | 4 - 8 , | vorzugsweise | 5 - 6 |
| | | | | |
| Querschnittsfläche | | 700 - 1200 mm², | vorzugsweise | 800 - 1000mm² |
| Federweg | dZ | 150 - 200 mm | | |
| Federrate | cZ | 10 - 20 N/mm | | |
| E-Modul | | 30 - 50 kN/mm² | | |
| Auslenkbereich in M2 | dZ2 | 10 - 60 mm | | |
| Verhältnis der Federraten: | | | | |
| cX/cZ | | 16 - 60 , | vorzugsweise | 20 - 40 |

Als Verbundwerkstoffe mit geeignetem E-Modul, hoher Dauerfestigkeit und guter Bruchsicherheit eignen sich beispielsweise:
- Verbunde mit 40 - 60 Vol% Faseranteil, welcher Faseranteil zu einem grossen Teil in Längsrichtung orientiert sein soll,
- technische Endlosfasern mit proportionalem Dehnungsbereich von mindestens 2%, im speziellen sind dies Glasfasern und Aramidfasern als Verstärkung,
- als Matrixmaterial Epoxy-Prepregs oder Thermoplaste wie Polyphenylensulfid (PPS), Polyethersulfon (PES), Polysulfon (PSU), Polyetherimid (PEI) und Polyamid (PA).

Mit diesem erfinderischen Prinzip wird eine besonders einfache, leichte, kostengünstige und raumsparende Radaufhängung geschaffen, welche nur wenige Komponenten aufweist und dennoch sehr gute Fahreigenschaften ergibt.

## Patentansprüche

1. Radaufhängung für eine Fahrzeugachse mit zwei Rädern mit einer einteiligen, durchgehenden und radführenden Verbundwerkstoff-Querblattfeder (10), welche aus einem mit grossteils längsorientierten technischen Endlosfasern verstärkten Kunststoff besteht, mit einer Zweipunktlagerung D der Blattfeder am Chassis und mit je einem Radträger an den Blattfederenden, wobei die Blattfederenden (13) mit einer Anlenkung G gelenkig mit den Radträgern (5) verbunden sind und mit je einem Längs- und Querkräfte abstützenden Radführungselement (20, 25), welches den Radträger gelenkig mit dem Chassis verbindet, so dass mit der Querblattfeder (10) und den Radführungselementen alle Radkräfte aufnehmbar sind, **dadurch gekennzeichnet, dass** die Zweipunktlagerung D eine hohe Steifigkeit in Querrichtung Y aufweist, mit einer Federrate cX der Federung in Fahrrichtung X und einer Federrate cZ in Hochrichtung Z, wobei das Verhältnis der Federraten cX / cZ mindestens 20 beträgt und dass die Anlenkung G als anisotropes elastisches Gelenk (50) ausgebildet ist.

2. Radaufhängung nach Anspruch 1, **dadurch gekennzeichnet, dass** das anisotrope elastische Gelenk als eine flexible Stelle (47) bildende Einbuchtung der Blattfeder ausgebildet ist.

3. Radaufhängung nach Anspruch 1, **dadurch gekennzeichnet, dass** das anisotrope elastische Gelenk aus einem flexiblen Verbindungsteil zwischen Blattfederende (13) und Radträger besteht.

4. Radaufhängung nach Anspruch 1, **dadurch gekennzeichnet, dass** das Radführungselement als radführendes Dämpferbein (20) oder als Dreieck-Querlenker (25) ausgebildet ist.

5. Radaufhängung nach Anspruch 1, **dadurch gekennzeichnet, dass** der Abstand dm des Lagerdrehpunkts D von der Blattfedermittellinie M kleiner ist die Blattfederdicke h.

6. Radaufhängung nach Anspruch 1, **dadurch gekennzeichnet, dass** der Lagerdrehpunkt D in der Blattfedermittellinie M liegt.

7. Radaufhängung nach Anspruch 1, **dadurch gekennzeichnet, dass** die maximale elastische Querverschiebung dY1 der Blattfeder in einem Lagerpunkt D zwischen 1 - 3 mm liegt.

8. Radaufhängung nach Anspruch 1, **dadurch gekennzeichnet, dass** die maximale elastische Querverschiebung dY1 in einem Lagerpunkt D nicht grösser ist als die Längenänderung dL1 des Mittelteils (11) der Blattfeder beim Einfedern.

9. Radaufhängung nach Anspruch 1, **dadurch gekennzeichnet, dass** die Querblattfeder einen Auslenkbereich dZ2 in der Fahrzeugmitte M2 aufweist, mit welchem die Federcharakteristik beeinflussbar ist.

10. Radaufhängung nach Anspruch 1, **dadurch gekennzeichnet, dass** die Aufhängung mit dem Radführungselement einen Winkel W1 zur Vertikalen Z und die Mittelebene M der Querblattfeder einen Winkel W2 zur Horizontalen X aufweist.

11. Radaufhängung nach Anspruch 1, **dadurch gekennzeichnet, dass** der Gelenkpunkt G am Radträger (5) in der Blattfedermittellinie M liegt.

12. Radaufhängung nach Anspruch 1, **dadurch gekennzeichnet, dass** die Blattfeder eine konstante Breite b aufweist.

13. Radaufhängung nach Anspruch 1, **dadurch gekennzeichnet, dass** die Blattfeder im Mittelteil (11) dicker ist als in den Aussenteilen (12).

14. Radaufhängung nach Anspruch 1, **dadurch gekennzeichnet, dass** die Blattfeder Glasfasern und/oder Aramidfasern enthält und einen unidirektionalen Faseranteil von mindestens 45 Vol% aufweist.

15. Radaufhängung nach Anspruch 1, **dadurch gekennzeichnet, dass** die Blattfeder aus Epoxy-Prepregs aufgebaut ist.

16. Radaufhängung nach Anspruch 1, **dadurch gekennzeichnet, dass** die Blattfeder einen Thermoplast wie PPS, PES, PSU, PEI oder PA als Kunststoff enthält.

17. Radaufhängung nach Anspruch 17, **dadurch gekennzeichnet, dass** der Mittelteil (11) der Blattfeder einen Gegenbogen (46) aufweist.

18. Radaufhängung nach Anspruch 1, **gekennzeichnet durch** eine zusätzliche einstellbare Spurstange (32), welche am Radträger angelenkt ist.

19. Radaufhängung nach Anspruch 1, **gekennzeichnet durch** eine niveauregulierende Zusatzfeder (35), welche auf die Mitte der Blattfeder einwirkt.

20. Radaufhängung nach Anspruch 1, **dadurch gekennzeichnet, dass** im mittleren Bereich Anschläge (36, 37) mit definierter Form und/oder Elastizität angeordnet sind, welche die Federcharakteristik der Blattfeder beeinflussen.

21. Radaufhängung nach Anspruch 1, **dadurch gekennzeichnet, dass** die Radträger (5) mit einem Bremsschild (7) einer Trommelbremse zusammen einstückig ausgebildet sind.

22. Radaufhängung nach Anspruch 1, **dadurch gekennzeichnet, dass** sie einen Träger (40) mit Halterungen (41) für die Lagerpunkte D aufweist, welcher als Baueinheit am Chassis montierbar ist und wobei am Träger auch Halterungen für die Lenkung (42) und/oder den Antrieb (43) vorgesehen sind.

23. Radaufhängung nach Anspruch 1, **dadurch gekennzeichnet, dass** die Blattfeder eine zylinderförmige Verdickung (18) aufweist, welche die Drehachse D definiert.

## Claims

1. Wheel suspension for a two-wheel vehicle axle, with a one-piece continuous composite-material transverse leaf spring (10), which has a suspension function and which is composed of plastic reinforced with largely lengthwise-oriented technical continuous filaments; with a two-point bearing D linking the leaf spring with the chassis; with a wheel mounting at each end of the spring, the ends of the spring (13) having an articulated link with the wheel mountings (5) by means of a coupling G, and each having a suspension element (20, 25) which supports the axial and radial forces and which provides an articulated link between the wheel mountings and the chassis, with the result that the transverse leaf spring (10) and the suspension elements absorb all the wheel forces, **characterised by** the fact that the two-point bearing D has a high level of rigidity in the transverse direction Y, with a spring rate cX of the spring system in the direction of travel X and a spring rate cZ in the upward direction Z, the ratio of the spring rates cX/cZ being at least 20, and the coupling G being in the form of an anisotropic flexible joint (50).

2. Wheel suspension as in Claim 1, **characterised by** the fact that the anisotropic flexible joint is in the form of an indentation of the leaf spring which forms a flexible point (47).

3. Wheel suspension as in Claim 1, **characterised by** the fact that the anisotropic flexible joint consists of a flexible link component between the end of the leaf spring (13) and the wheel mountings.

4. Wheel suspension as in Claim 1, **characterised by** the fact that the suspension element is in the form of a suspension damper strut (20) or a wishbone control arm (25).

5. Wheel suspension as in Claim 1, **characterised by** the fact that the space dm between the bearing pivot D and the centre line M of the leaf spring is smaller than the thickness h of the leaf spring.

6. Wheel suspension as in Claim 1, **characterised by** the fact that the bearing pivot D lies on the centre line M of the leaf spring.

7. Wheel suspension as in Claim 1, **characterised by** the fact that the maximum flexible transverse movement dY1 of the leaf spring in a bearing pivot D is between 1 and 3 mm.

8. Wheel suspension as in Claim 1, **characterised by** the fact that the maximum flexible transverse movement dY1 in a bearing pivot D is not greater than the linear deformation dL1 of the centre part (11) of the leaf spring during deflection.

9. Wheel suspension as in Claim 1, **characterised by** the fact that the transverse leaf spring has an excursion range dZ2 at the centre M2 of the vehicle which can be used to affect the spring characteristic.

10. Wheel suspension as in Claim I, **characterised by** the fact that the wheel suspension with the suspension element displays an angle W1 to the vertical Z, and that the centre plane M of the transverse leaf spring displays an angle W2 to the horizontal X.

11. Wheel suspension as in Claim 1, **characterised by** the fact that the hinge point G on the wheel mounting (5) lies on the centre line M of the leaf spring.

12. Wheel suspension as in Claim 1, **characterised by** the fact that the leaf spring has a constant width b.

13. Wheel suspension as in Claim 1, **characterised by** the fact that the centre part (11) of the leaf spring is thicker than the outer parts (12).

14. Wheel suspension as in Claim 1, **characterised by** the fact that the leaf spring contains glass fibres and/or aramide fibres, and has a unidirectional proportion of fibres of at least 45% by volume.

15. Wheel suspension as in Claim 1, **characterised by** the fact that the leaf spring is made of epoxy prepreg.

16. Wheel suspension as in Claim 1, **characterised by** the fact that the plastic in the leaf spring is a thermoplastic such as PPS, PES, PSU, PEI or PA.

17. Wheel suspension as in Claim 1, **characterised by** the fact that the centre part (11) of the leaf spring has a reverse curve (46).

18. Wheel suspension as in Claim 1, **characterised by** an additional, adjustable track rod (32) which is coupled to the wheel mounting.

19. Wheel suspension as in Claim 1, **characterised by** a level-adjusting auxiliary spring (32) which acts on the centre of the leaf spring.

20. Wheel suspension as in Claim 1, **characterised by** the fact that there are limit stops (36, 37) of defined shape and/or elasticity in the central area which affect the spring characteristic of the leaf spring.

21. Wheel suspension as in Claim 1, **characterised by** the fact that the wheel mountings (5) are made in one piece with a brake shield (7) of a drum brake.

22. Wheel suspension as in Claim 1, **characterised by** the fact that it has a support (40) with mountings (41) for the bearing points D, which can be fitted on the chassis as a modular unit, and in which the support also has mountings for the steering (42) and/or the drive (43).

23. Wheel suspension as in Claim 1, **characterised by** the fact that the leaf spring has a cylindrical enlarged area which defines the swivelling axis D.

## Revendications

1. Suspension de roue pour un essieu de véhicule à deux roues avec un ressort à lames transversal (10) en matériau composite en une seule pièce, traversant et guidant la roue, qui se compose d'un matériau synthétique renforcé de fibres techniques continues orientées en grande partie en direction longitudinale, avec une fixation en deux point D du ressort à lames au châssis et respectivement un support de roue aux extrémités des ressorts à lames, les extrémités des ressorts à lames (13) étant reliées de manière articulée avec les supports de roues (5) au moyen d'une articulation G, et avec respectivement un élément de guidage de roue (20, 25) reprenant les efforts longitudinaux et transversaux, qui relie le support de roue de manière articulée avec le châssis, tous les efforts induits par les roues pouvant être repris par le ressort à lames transversal (10) et les élément de guidage de roues, **caractérisée en ce que** la fixation en deux points D possède une grande rigidité en direction transversale Y, avec un coefficient d'élasticité cX de la suspension en direction de déplacement X et un coefficient d'élasticité cZ en direction verticale Z, le rapport entre les coefficients d'élasticité cX/cZ étant au moins de 20 et l'articulation G étant conçue sous forme d'articulation élastique anisotrope (50).

2. Suspension de roue selon la revendication 1, **caractérisée en ce que** l'articulation élastique anisotrope est conçue en tant que concavité du ressort à lames formant un endroit souple (47).

3. Suspension de roue selon la revendication 1, **caractérisée en ce que** l'articulation élastique anisotrope se compose d'un élément de liaison flexible entre l'extrémité (13) du ressort à lames et le support de roue.

4. Suspension de roue selon la revendication 1, **caractérisée en ce que** l'élément de guidage de roue est conçu comme jambe d'amortissement (20) guidant la roue ou comme bras oscillant triangulaire transversal (25).

5. Suspension de roue selon la revendication 1, **caractérisée en ce que** l'écart dm du point de rotation de la fixation D par rapport à la ligne médiane M du ressort à lames est moins important que l'épaisseur du ressort à lames h.

6. Suspension de roue selon la revendication 1, **caractérisée en ce que** le point de rotation de la fixation D se trouve sur la ligne médiane M du ressort à lames.

7. Suspension de roue selon la revendication 1, **caractérisée en ce que** le décalage latéral élastique maximal dY1 du ressort à lames sur un point de fixation D a une valeur située entre 1 et 3 mm.

8. Suspension de roue selon la revendication 1, **caractérisée en ce que** le décalage latéral élastique maximal dY1 sur un point de fixation D n'est pas plus important que la modification de la longueur dL1 de la partie centrale (11) du ressort à lames lors de la compression du ressort.

9. Suspension de roue selon la revendication 1, **caractérisée en ce que** le ressort à lames transversal possède une zone d'excursion dZ2 au centre du véhicule M2 avec laquelle il est possible d'influencer les caractéristiques de suspension.

10. Suspension de roue selon la revendication 1, **caractérisée en ce que** la suspension forme avec l'élément de guidage de la roue un angle W1 par rapport à la verticale Z et **en ce que** le niveau central M du ressort à lames transversal forme un angle W2 par rapport à l'horizontale X.

11. Suspension de roue selon la revendication 1, **caractérisée en ce que** le point d'articulation G sur le support de roue (5) se trouve sur la ligne médiane M du ressort à lames.

12. Suspension de roue selon la revendication 1, **caractérisée en ce que** le ressort à lames a une largeur constante b.

13. Suspension de roue selon la revendication 1, **caractérisée en ce que** dans la partie centrale (11) le ressort à lames est plus épais que dans les parties extérieures (12).

14. Suspension de roue selon la revendication 1, **caractérisée en ce que** le ressort à lames contient des fibres de verre et/ou d'aramide et comprend une fraction unidirectionnelle de fibres d'au moins 45 % vol.

15. Suspension de roue selon la revendication 1, **caractérisée en ce que** le ressort à lames est conçu à partir de feuilles préimprégnées d'époxy.

16. Suspension de roue selon la revendication 1, **caractérisée en ce que** le ressort à lames contient comme matériau synthétique une matière thermoplastique tel que du PPS, du PES, du PSU du PEI ou du PA.

17. Suspension de roue selon la revendication 1, **caractérisée en ce que** la partie centrale (11) du ressort à lames comprend un coude inversé (46).

18. Suspension de roue selon la revendication 1, **caractérisée par** une barre d'accouplement supplémentaire réglable (32) qui est fixée de manière articulée sur le support de roue.

19. Suspension de roue selon la revendication 1,
**caractérisée par** un ressort supplémentaire de régulation de niveau (35) qui agit sur le centre du ressort à lames.

20. Suspension de roue selon la revendication 1, **caractérisée en ce que** dans la zone centrale sont disposées des butées (36, 37) d'une forme et/ou d'une élasticité définies qui influencent les caractéristiques de suspension du ressort à lames.

21. Suspension de roue selon la revendication 1, **caractérisée en ce que** les supports de roues (5) sont réalisés d'une seule pièce avec un bouclier de freinage (7) d'un frein à tambour.

22. Suspension de roue selon la revendication 1,
**caractérisée en ce qu'**elle comprend un support (40) avec des attaches (41) pour les points de fixation D qui peut être monté comme unité modulaire sur le châssis, des attaches pour le système de direction (42) et/ou pour le système de propulsion (43) étant également prévues sur le support.

23. Suspension de roue selon la revendication 1, **caractérisée en ce que** le ressort à lames comprend un renflement cylindrique (18) qui forme l'axe de rotation D.
